(19) **Europäisches Patentamt
European Patent Office
Office européen des brevets**

(11) **EP 4 442 903 B1**

(12) **EUROPEAN PATENT SPECIFICATION**

(45) Date of publication and mention
of the grant of the patent:
**03.12.2025 Bulletin 2025/49**

(21) Application number: **24168059.4**

(22) Date of filing: **02.04.2024**

(51) International Patent Classification (IPC):
***D21F 3/08*** (2006.01)   ***D21G 1/02*** (2006.01)

(52) Cooperative Patent Classification (CPC):
**D21G 1/0233; D21F 3/08**

(54) **THERMAL TREATMENT OF DEFORMABLE COATING OF A NIP ROLL**

WÄRMEBEHANDLUNG EINER VERFORMBAREN BESCHICHTUNG EINER ANDRUCKWALZE

TRAITEMENT THERMIQUE D'UN REVÊTEMENT DÉFORMABLE D'UN ROULEAU PINCEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.04.2023 FI 20235377**

(43) Date of publication of application:
**09.10.2024 Bulletin 2024/41**

(73) Proprietor: **Etteplan Oyj**
**02150 Espoo (FI)**

(72) Inventors:
• **PÖLLÄNEN, Ilkka**
**45360 Valkeala (FI)**
• **VON HERTZEN, Raimo**
**00200 Helsinki (FI)**

(74) Representative: **Boco IP Oy Ab**
**Kansakoulukatu 3**
**00100 Helsinki (FI)**

(56) References cited:
**EP-B- 1 086 273     CA-A- 1 107 550
CN-B- 102 535 231     US-A- 3 529 045**

## Description

### Field

The present invention relates to a method and a system related to maintenance of nip rolls of paper and board machines. More particularly, the present invention relates to a method and a system related to use of thermal treatment in maintenance of deformable coating of nip rolls of paper and board machines.

### Background

In field of paper and board (cardboard) machines, a nip refers to a gap between two rolls. Surfaces of the rolls are forced together, typically by pressing them towards each other by hydraulic cylinders. The nip applies a pressing force on a felt and/or a wire and/or the material web passing through the rolling nip. Typically, as is known in the art, a paper or board machine has three to four nips for various purposes.

In the following description, terms polymer coating and viscoelastic polymer coating are used interchangeably.

Nip rolls (also referred to as nip rollers) of paper or board machines typically have a radially resilient viscoelastic polymer coating with thickness in approximate range between 10 to 15 mm. Over time, the polymer coating deforms due to exposure to pressure caused by the nip. A typical deformation of the polymer coating causes the roll to have a cross-section shape that resembles a flower-shaped gingerbread cookie: a relatively regularly repeating pattern of radially alternating thicker and thinner polymer coating zones, which form shallow peaks and valleys. Such patterned deformation causes vibration of nip rolls that causes fluctuation of the nip force at the nip, which reduces quality of the end-product traveling through the nip. The roll(s) or the polymer coating thereof needs to be fixed or even replaced to achieve the wanted quality of the end-product.

Oscillation of nip rolls due to deformation of the polymer coating thereof is self-induced and has been widely studied. One type of solution is to try to prevent such polymer coating deformation, but no reliable solution has been found that would reliably prevent it.

The common way to cure the vibration problem is to perform maintenance of the nip roll during which at least a significant portion of the deformed polymer coating is removed from the nip roller for example by grinding and the polymer coating is thereafter replaced with a new one. If deformation is not in severe level, smoothing or sanding may be sufficient to even out surface of the polymer coating. A problem in this repair or replacement process is that it requires lengthy maintenance periods during which the entire paper or board machine is stopped. Furthermore, maintenance of nip roll polymer coating is not performed at the site, where the paper or board machine is operated for manufacturing paper or board, but large nip rolls are typically disassembled and transported away for maintenance. The entire maintenance process, including maintenance periods of no production, transport of the big nip rolls, grinding and replacement process of the polymer coating itself, sums up to a very high total cost of polymer coating maintenance. Operation of the paper or board machine may be continued only after the maintained nip roll is reassembled or a replacement nip roll is assembled. Thus, significant production disruptions as well as costs are caused by maintenance of the polymer coating.

### Description of the related art

Patent FI123813 B discloses a method for grinding a cylindrical workpiece, such as a roll.

Patent EP1086273 B1 discloses a method for conditioning a roll by cleaning and/or grinding.

Patent US 3529045 A discloses a thermal treatment apparatus and a method for heat treating the surface of a nip roll. Heat is supplied both internally and externally, and equality of the external and internal temperatures is maintained.

Patent Fi 125000 B discloses a method for heat treating the surface of a rotor. A local temperature of the rotor is adjusted to cause an asymmetric temperature gradient to cause bending of the rotor.

### Summary

An object is to provide a method and apparatus so as to solve the problem of cost-efficient maintenance of deformed nip roll coating. The objects of the present invention are achieved with an apparatus according to claim 1. The objects of the present invention are further achieved with a method according to the claim 10.

The preferred embodiments of the invention are disclosed in the dependent claims.

The present invention is based on the idea of maintaining the coating in situ, without removing the nip roll under maintenance from the paper or board machine, by restoring intended shape of the coating by applying a thermal treatment on the coating using a thermal treatment apparatus.

The apparatus and the method are applicable to any coating which restores its shape faster when exposed to heat treatment. In the following, a viscoelastic polymer coating, a common type of coating of nip rolls, is used as non-limiting example of a coating with such characteristics. Also, rubber coatings may be used, which have a like capability of restoring its shape faster when exposed to heat treatment. Such coatings are referred herein as thermally shape-restoring coatings.

According to a first aspect, a thermal treatment apparatus for heat treating a deformed thermally shape-restoring coating of a nip roll is provided. The thermally shape-restoring coating is such as a viscoelastic polymer coating and/or rubber. The thermal treatment apparatus is configured to be placed in vicinity of the nip roll. The thermal treatment apparatus comprises a thermal treatment device comprising a heater for heating the thermally shape-restoring coating, a non-contact temperature sensor for measuring temperature of the thermally shape-restoring coating, and at least one processing means configured to control operation of the heater on basis of the measured temperature of the thermally shape-restoring coating.

According to some aspects, the thermal treatment device further comprises a non-contact distance measurement sensor for detecting amount of radial deformation of the thermally shape-restoring coating. The at least one processing means is further configured to control operation of the heater on basis of the detected amount of deformation of the thermally shape-restoring coating.

According to some aspects, the at least one processing means is configured to control the heater to perform heat treatment of the thermally shape-restoring coating over a predetermined heat treatment period.

According to some aspects, the at least one processing means is configured to determine need for thermal treatment of the thermally shape-restoring coating based on vibration of the nip roll detected by one or more sensors.

According to some aspects, need for thermal treatment of the thermally shape-restoring coating is determined based on detecting increase of at least one frequency component in the vibration of the nip roll.

According to some aspects, the heater is a radiant heater such as an infrared heater, or the heater is a hot-air blower.

According to some aspects, the thermal treatment apparatus is configured to be assembled and operated in situ in the operating environment of the nip roll.

According to some aspects, the thermal treatment apparatus further comprises a rail configured to be permanently or removably assembled next to the nip roll, and moving means for effecting moving of the heat treating apparatus in the longitudinal dimension of the rail. The thermal treatment device is configured to be moveable along the rail in vicinity of the outer surface of the nip roll covered with the thermally shape-restoring coating such that movement direction of the heat-treating device is parallel to the rotation axis of the nip roll. The at least one controller is further configured to control said movement of the heat-treating device along the rail.

According to some aspects, the thermal treatment device is an elongated device extending over the longitudinal dimension of the nip roll that is coated by the thermally shape-restoring coating. The thermal treatment device is configured to be permanently or removably assembled next to the nip roll in vicinity of the outer surface of the nip roll covered with the thermally shape-restoring coating such that the longitudinal axis of the thermal treatment device is parallel to the rotation axis of the nip roll.

According to some aspects, the thermal treatment apparatus further comprises a data communication interface for providing a user interface.

According to a second aspect, s method for heat treating of a deformed thermally shape-restoring coating or a nip roll is provided. The thermally shape-restoring coating is such as a viscoelastic polymer coating and/or rubber. The method is performed during a maintenance break. The method comprises i) disengaging nip of the nip roll, ii) heating the thermally shape-restoring coating with a heater of a thermal treatment device to cause relaxation of the thermally shape-restoring coating to restore its shape, iii) measuring temperature of the thermally shape-restoring coating by a non-contact temperature measurement sensor, and iv) controlling operation of the heater on basis of the measured temperature of the thermally shape-restoring coating.

According to some aspects, the method further comprises determining amount of deformation of the thermally shape-restoring coating based on a measurement performed by a non-contact distance measurement sensor and controlling operation of the heater on basis of the determined amount of deformation of the thermally shape-restoring coating.

According to some aspects, the method further comprises controlling the heater to perform heat treatment of the thermally shape-restoring coating over a predetermined heat treatment period.

According to some aspects, the method further comprises determining need for thermal treatment of the thermally shape-restoring coating based on vibration of the nip roll detected by one or more sensors.

According to some aspects, said determining need for thermal treatment of the thermally shape-restoring coating is based on detecting increase of at least one frequency component in the detected vibration of the nip roll.

According to some aspects, said disengaging of the nip roll is performed by adjusting support means of the nip roll, without disassembling the nip roll.

According to some aspects, the method comprises stopping the heat treatment upon determining, based on measurement performed by the non-contact distance measurement sensor, that amount of deformation of the thermally shape-restoring coating at any point on the outer surface of the nip roll is less than a predetermined threshold value.

According to some aspects, the method comprises cleaning the outer surface of the thermally shape-restoring coating from any debris before heating the thermally shape-restoring coating.

According to some aspects, when implemented by the thermal treatment apparatus configured to be moveable along the rail, the method further comprises controlling position and/or movement speed of the thermal treatment apparatus by the at least one controller.

The present invention has the advantage that maintenance can be performed during a relatively short maintenance break or other break in situ, in other words at the operation premises without disassembling and transporting the nip roller, and it significantly reduces need for repairing or even replacing the deformed coating.

### Brief description of the drawings

In the following the invention will be described in greater detail, in connection with preferred embodiments, with reference to the attached drawings, in which

Figure 1 illustrates typical deformation of polymer coating of nip rolls.
Figure 2 illustrates dependence of shift factor of a viscoelastic polymer on temperature
Figure 3 illustrates schematically a thermal treatment apparatus according to a first embodiment
Figure 4 illustrates implementation of a thermal treatment device according to the first embodiment
Figure 5 illustrates schematically a thermal treatment apparatus according to a second embodiment
Figure 6 illustrates implementation of a thermal treatment device according to the second embodiment
Figure 7 illustrates steps of a thermal treatment method
Figure 8 illustrates steps of a thermal treatment method

### Detailed description

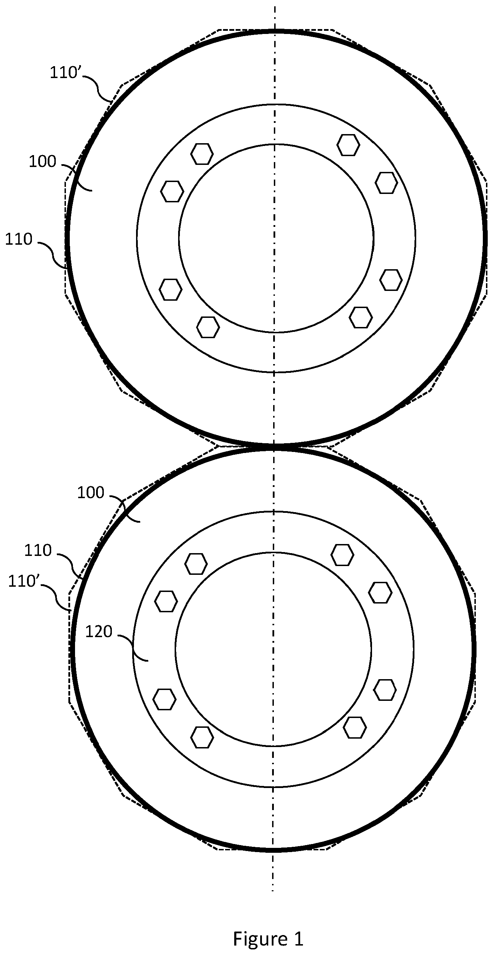

Figure 1 illustrates two nip rolls 100, each having a thin polymer coating 110 on their outer surface. In this context, a thin polymer coating refers to thickness of a polymer coating that is in millimeter range, typically less than 20 mm, which can be considered thin as compared to diameter of the nip roll 100, which is typically tens of centimeters. Over time, the polymer coating 110 is deformed, which is illustrated by dotted lines 110'. This drawing is not in scale: deformation of the polymer coating is greatly exaggerated - it is typically in mm-range, clearly less than thickness of the polymer coating layer, and thus not easily visually detectable from the rolls. Typically, the deformation follows a repeating pattern: an integer number of shallow "peaks" and "valleys" are formed in the polymer coating, which induces an oscillation frequency in a rotating roll 100 that is a multiple of the rotation rate of the roll 100. The presence of deformation can be detected indirectly, for example by analyzing vibrations of the roller.

A typical nip roll is rotated by electric motors provided with frequency converters that enable adjusting rotating speed of the nip roll in stepless manner between zero and a production speed. The term production speed refers to the rotation speed of the nip roll that is used in manufacturing paper or board.

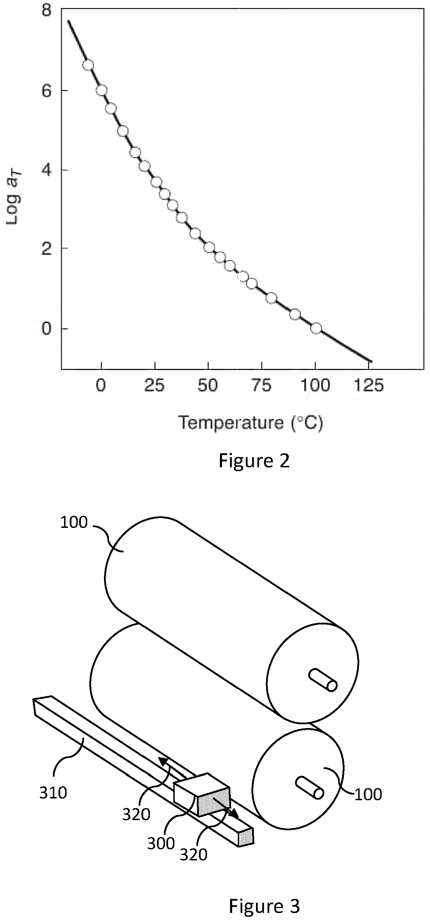

Figure 2 illustrates the dependence of shift factor $a_T$ of an exemplary viscoelastic polymer on temperature. The shift factor - temperature relationship is known to be approximately identical for all amorphous polymers.

As known in the art, relaxation of a viscoelastic polymer refers to capability of the material to recover from deformation caused by stress. In case of a nip roll, the main source of stress on the polymer coating is the force applied on the polymer coating by the nip.

As is known in the art, relaxation time $\tau_p$ of a viscoelastic polymer is directly proportional to the shift factor $a_T$. For example, for temperatures $T_{25}=25°C$ and $T_{75}=75°C$ the corresponding relaxation times are related as

$$\frac{\tau_p(T_{25})}{\tau_p(T_{75})} = \frac{a_T(T_{25})}{a_T(T_{75})} \tag{1}$$

Relaxation time of the polymer can thus be decreased by increasing temperature. Figure 2 is a non-limiting example illustrating the relationship between the shift factor $a_T$ and temperature. According to this example, by increasing temperature by 50°C, from 25°C to 75°C, causes a decrease in the shift factor $a_T$ by a factor $1/10^{(3.71-1.06)} \approx 1/450$. Based on equation (1), this means that relaxation time of the viscoelastic polymer also decreases by the same factor. Thus, ratio of the relaxation times $\tau_p(T_{25})$ and $\tau_p(T_{75})$ is approximately $10^{(3.71-1.06)} \approx 450$, which means that the 50°C increase in the temperature of the exemplary viscoelastic polymer multiplies the speed of relaxation and thus capability of the viscoelastic polymer to restore its original shape by a factor of 450. Similarly, if the temperature is increased from 25°C to 100°C, for example, the relaxation speed is multiplied approximately by a factor of 5080.

There is naturally an upper limit for each polymer for how much temperature can be increased safely without risk of permanently harming and/or burning of the polymer. Thus, heat treatment of the polymer should be controlled such that it occurs within a safe temperature range. The acceptable temperature range depends on the polymer.

Figure 3 illustrates schematically a thermal treatment apparatus according to a first embodiment of the invention. For enabling effective heating of the polymer coating of the nip roll 100, a thermal treatment device 300 is provided in the vicinity of the outer surface of the nip roll 100. The thermal treatment device 300 is moveable in parallel with the longitudinal dimension of the cylindrical nip roll 100 so that its distance from the ideal, non-deformed outer surface of the nip roll 100 remains constant. Preferably, the thermal treatment device 300 moves back and forth in the vicinity of the outer surface (the polymer coating) of the nip roll 100 during the thermal treatment operation, as illustrated by arrows 320.

The thermal treatment device 300 comprises a heater, such as a radiant heater or a hot-air blower, at least one optical distance measurement sensor and at least one temperature measurement sensor. The thermal treatment device 300 is configured to be moveable along a rail 310 that preferably not only provides mechanical support for the thermal treatment device 300 but also provides a connection to a power supply for operating the thermal treatment device 300. Alternatively, power may be supplied for the thermal treatment device 300 by wiring that is not comprised in the rail. Even a battery-operated thermal treatment apparatus is possible, but may require large batteries, which makes the apparatus big and heavy.

A movable thermal treatment device 300 improves safety by enabling moving the thermal treatment device 300 away from the vicinity of the nip roll 100 when no thermal treatment is performed, for example during operation of the paper or board machine. The rail may be movable, or it may remain in place even during normal operation of the paper or board machine such that thermal treatment can be easily started as soon as a maintenance break starts. A small thermal treatment device 300 can be easily protected from the environment when not in use, for example by placing it in a protective casing, which may be removed or opened before the thermal treatment device 300 is activated. Protecting the thermal treatment device 300 when not in use improves safety, because in paper or board machine environments, there may be some loose fiber of the material web floating in the air that may attach to any surfaces in the environment. Such loose fiber may cause a fire hazard if attached on a heater device (a radiant heater or a hot-air blower) of the thermal treatment device 300.

For thermal treatment, nip rolls 100 are preferably detached from each other, without actually disassembling the nip roll from the paper or board machine, such that there is no pressure or physical contact between polymer coatings on the outer surfaces thereof. Thus, force at the nip does not hinder or distract thermally caused relaxation of the polymer coating. Preferably, rotation speed of the nip roll under thermal treatment is adjusted into a value that falls between zero and normal operation speed. Rotating the nip roll 100 during the thermal treatment enables heating the entire polymer coating. By combining rotation of the nip roll 100 and movement of the thermal treatment device 300, the heating action "scans" over the surface of the nip roll 100 so that the entire polymer coating area can be treated.

By utilizing speed adjustment capability of the electric motor rotating the nip roll, rotating speed can be set into any wanted value between zero and the maximum design speed. The heat treatment process can be controlled by determining a suitable combination of rotation speed of the nip roll 100, movement of the thermal treatment device 300 and power of the radial heater. This enables controlling both temperature and time period of the thermal treatment. For the thermal treatment to be successful, it is sufficient that the polymer coating is heated to a temperature that is in a wanted range of temperatures that decreases the shift factor, over a sufficiently long period of time. The actual temperature range depends at least on the material of the polymer coating. Also amount of deformation, thickness of the polymer coating and available time for thermal treatment can be used as parameters in controlling the process. Required thermal treatment time depends on amount of deformation that needs to be removed by the relaxation process. By continuously measuring the amount of deformation of the polymer coating during the thermal treatment, it can be determined when the thermal treatment process can be stopped. According to some embodiments, thermal treatment may be stopped after a predetermined heat treatment period has lapsed since it was started. The predetermined heat treatment period refers to a time period calculated based on characteristics of the polymer coating or defined based on testing, such that heat treating the polymer coating over the predetermined heat treatment period is sufficient for remove deformation thereof by the applied heat treatment.

Results of the thermal treatment may sometimes be suboptimal because deformation of the polymer coating may be partially caused by changes in the polymer coating that are not fully reversible by heat treatment. Examples of such non-reversible changes comprise wear as well as plastic deformation of the polymer cover. Even in such cases, intervals between subsequent coating repair or replacement operations can be significantly increased by performing thermal treatment during any available maintenance break, which provides significant economical savings. The thermal treatment process is preferably stopped when remaining deformation of the polymer coating is determined to be less than a predefined threshold or, as explained above, after performing thermal treatment over a predetermined heat treatment period.

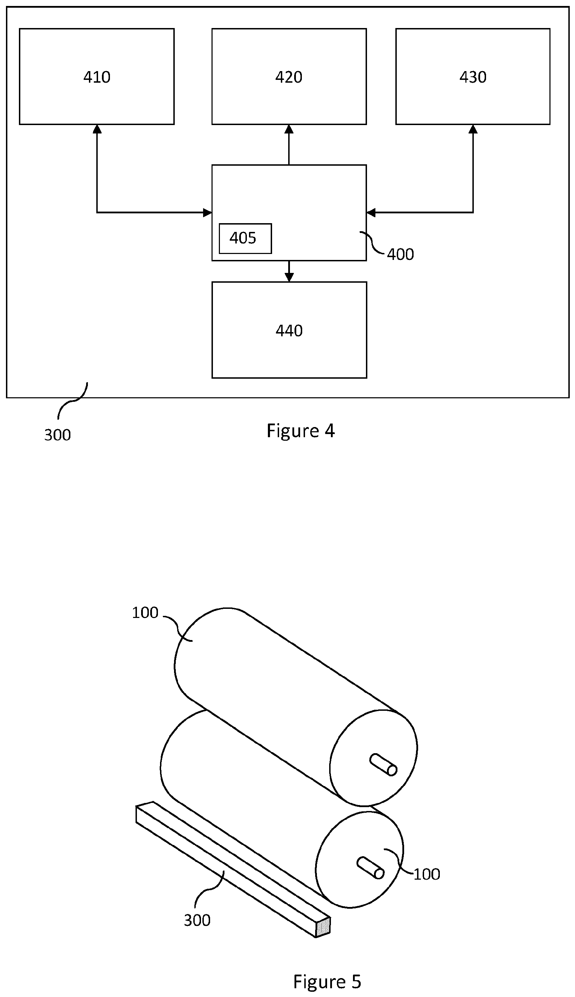

Figure 4 illustrates implementation of a thermal treatment device 300 according to the first embodiment. For effecting and controlling the wanted heating action, the thermal treatment device comprises a heater 410, at least one distance measurement sensor 420 and at least one temperature measurement sensor 430. The heater 410 may be a radiant heater, preferably an infrared heater. Alternatively, a hot-air blower may be used. The at least one distance measurement sensor 420 performs non-contact distance measurement, for accurately measuring distance between the sensor and outer surface of the polymer coating for detecting shape of the outer surface of the polymer coating. The shape of the outer surface can be determined as amount of deformation. In addition, locations of deformation of the polymer coating may be detected. The at least one distance measurement sensor 420 can be used both for determining initial amount of deformation and for detecting achieved form due to reestablishing relaxation effects of the thermal treatment. The at least one distance measurement sensor 420 may be any suitable distance-measuring optical device, such as a laser distance sensor or a displacement sensor. The predefined threshold value that indicates that thermal treatment has reached its target and can be stopped is preferably determined based on analyzing signals from the at least one distance measurement sensor 420. Alternatively, thermal treatment may simply be performed over a predetermined heat treatment period.

The temperature measurement sensor 430 is preferably configured to non-contact measure temperature of the polymer coating. The temperature measurement sensor 430 may be an infrared temperature sensor. The temperature measurement sensor 430 is used for detecting temperature of the polymer coating such that time and/or power used for heating can be optimized so that optimal temperature is achieved for wanted relaxation effect on the polymer coating.

Preferably, at least the heater 410 and the temperature measurement sensor 430 are directed to the same area on the polymer coating on the outer surface of the nip roll 100. According to some embodiments, also the at least one distance measuring sensor 420 is directed to the same area on the polymer coating on the outer surface of the nip roll 100 as the at least one heater 410 and the at least one temperature measurement sensor 430.

The thermal treatment device 300 further comprises moving means 440, such as an electrical or pneumatic motor, for effecting movement of the thermal treatment device along the rail 310. For the thermal treatment operation, the rail may be assembled parallel to the rotation axis of the nip roll 100, in vicinity of the outer surface of the nip roll 100 such that the thermal treatment device 300 can be moved in parallel to the rotation axis of the nip roll 100 in vicinity of its outer surface, and thus in vicinity of the polymer coating of the nip roll 100. For enabling thermal treatment of the entire outer surface of the nip roll 100, the nip roll is preferably continuously rotated about its rotation axis during the thermal treatment.

The thermal treatment device 300 comprises at least one processor 400 and at least one memory 405 associated with the at least one processor 400. Computer program code is stored in the at least one memory 405 that controls, when executed by the at least one processor 400, the thermal treatment process. The at least one distance measurement sensor 420 and the at least one temperature measurement sensor 430 input measurement data as parameter values that are used for controlling position of the thermal treatment device 300 and operation of the heater 410. The rotation speed of the nip roll 100 and/or movement speed of the thermal treatment device 300 may be varied to facilitate reshaping of the polymer coating that is being heated by the heater 410 of the thermal treatment device 300. At least one data communication interface (not shown) may be provided towards the at least one processor 400 for providing a user interface through which an operator may follow operation of the thermal treatment device 300, adjust settings of the thermal treatment device 300 and so on. The user interface may also display measured deformations and temperatures at different positions of the nip roll 100.

Figure 5 illustrates schematically a thermal treatment apparatus according to a second embodiment of the invention. For heating polymer coating of the nip roll 100, a thermal treatment device 300 is provided in the vicinity of the outer surface of the nip roll 100. In the second embodiment, the thermal treatment device 300 is elongated such that it covers the entire longitudinal dimension of the cylindrical nip roll 100.

The thermal treatment device 300 comprises at least one heater, at least one distance measurement sensor 420 and at least one temperature measurement sensor 430.

When not in use, the thermal treatment device 300 according to the second embodiment may be covered by a protective casing when no thermal treatment is performed, for example during operation of the paper or board machine. The safety related reasons that suggest covering of the thermal treatment device 300 during normal operation of the nip roll 100 were discussed above in connection to the first embodiment. The thermal treatment device 300 may be removably or permanently assembled. During normal operation of the nip roll 100, the thermal treatment device 300 may remain in place even during normal operation of the paper or board machine such that thermal treatment can be easily started as soon as a maintenance break starts simply by removing the protective casing.

Like in the first embodiment, for thermal treatment, nip rolls 100 are preferably moved away from each other such that there is no pressure or physical contact between polymer coatings on the outer surfaces thereof. Thus, force at the nip does not hinder or distract thermally caused relaxation of the polymer coating.

The rotation speed of the nip roll under thermal treatment is adjusted into a value that is between zero and maximum design speed. Rotating the nip roll 100 during the thermal treatment facilitates even heating of the polymer coating. When the thermal treatment device 300 is long enough to cover the entire longitudinal dimension of the nip roll 100, mere rotating the nip roll 100 enables thermal treatment of the entire polymer coating and no moving means is required to move the thermal treatment device 300 during the thermal treatment.

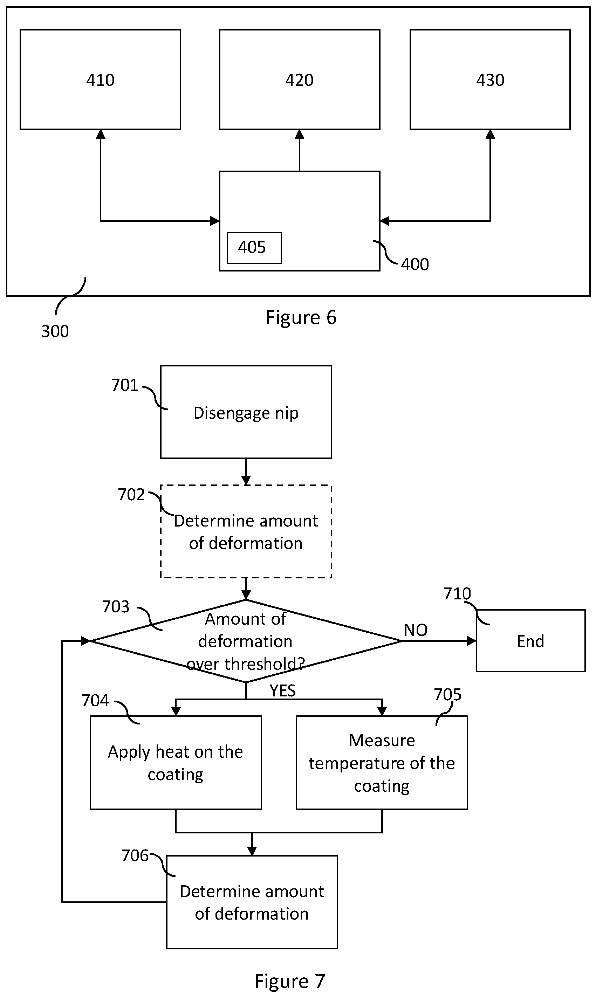

Figure 6 illustrates implementation of a thermal treatment device 300 according to the second embodiment. For effecting and controlling the wanted heating action, the thermal treatment device 300 comprises at least one heater 410, the at least one distance measurement sensor 420 and at least one temperature measurement sensor 430. The at least one heater 410 may be an infrared heater. The at least one distance measurement sensor 420 performs non-contact distance measurement, for accurately measuring distance between the sensor and outer surface of the polymer coating for detecting amounts and/or locations of deformation of the polymer coating as well as detecting effects of the thermal treatment. The at least one distance measurement sensor 420 may be any suitable distance-measuring optical device, such as a laser distance sensor.

The at least one temperature measurement sensor 430 is preferably configured to perform non-contact temperature measurement of the polymer coating. The at least one temperature measurement sensor 430 may be an infrared temperature sensor. The at least one temperature measurement sensor 430 is used for detecting temperature of the polymer coating such that time and/or power used for heating can be optimized so that optimal temperature is achieved for wanted relaxation effect on the polymer coating. Preferably, the at least one heater 410 and the at least one temperature measurement sensor 430 are directed to the same area on the polymer coating on the outer surface of the nip roll 100. According to some embodiments, also the at least one distance measurement sensor 420 is directed to the same area on the polymer coating on the outer surface of the nip roll 100 as the at least one heater 410 and the at least one temperature measurement sensor 430.

For the thermal treatment operation, the thermal treatment device 300 is placed parallel to the rotation axis of the nip roll 100, in vicinity of the outer surface of the nip roll 100. For thermal treatment of the entire outer surface of the nip roll 100, the nip roll is preferably continuously rotated about its rotation axis during the thermal treatment.

The thermal treatment device 300 comprises at least one processor 400 and at least one memory 405 associated with the at least one processor 400. Computer program code is stored in the at least one memory 405 that controls, when executed by the at least one processor 400, the thermal treatment process. The distance measurement sensor 420 and the temperature measurement sensor 430 input measurement data as parameter values that are used for controlling position of the thermal treatment device 300 and operation of the heater 410. The rotation speed of the nip roll 100 may be varied to facilitate reshaping of the polymer coating that is being heated by the heater 410 of the thermal treatment device 300. The thermal treatment device 300 may comprise a communication connection (not shown) towards a controller or computer for controlling rotation speed of the nip roll 100. Further, a data communication interface (not shown) may be provided towards the at least one processor 400 for providing a user interface through which an operator may follow operation of the thermal treatment device 300, adjust settings of the thermal treatment device 300, supervise results achieved by the thermal treatment, supervise results achieved by the thermal treatment and so on.

A need for thermal treatment of polymer coating of a nip roll may be based on detecting and analyzing vibration of the nip roll with direct or indirect measurements made by means of any known, suitable type of sensors. Frequency spectrum of detected vibration is preferably analyzed using Fourier transform, which may be conveniently implemented as Fast Fourier Transform FFT. Increase in intensity of an unwanted frequency component in the detected vibration may be used as indicator of deformation of the polymer coating and thus need of thermal treatment thereof.

Figure 7 illustrates steps of a method of thermal treatment of a deformed polymer coating of a nip roll during a maintenance break according to some embodiments.

In the step 701, the nip or nips of the nip roll to be thermally treated is/are disengaged from any adjacent nip rolls that normally form a nip when the paper or board machine is in normal production operation.

Disengaging the nip roll can be typically performed by adjusting support means of the nip roll. This enables thermal processing of the polymer coating during a maintenance break without needing to disassemble the nip roll.

Preferably, preparations for the thermal treatment also include cleaning the nip roll from any debris of web material left on the polymer coating's surface. Because the web processed by the paper or cardboard machine is fibrous, there is typically some paper or pulp material in the air and eventually attached on surfaces. It is preferable that any such debris is removed, for example by washing the coating's surface to be thermally treated to avoid any fire hazards to be caused by the thermal treatment process.

Optionally, amount of deformation is determined in step 702 already before any thermal treatment is started. This way, it may be determined in the decision step 703 that there is no need for thermal treatment, in which case the thermal treatment process is not started.

For determining amount of deformation, the nip roll is rotated and the at least one distance measurement sensor is used to obtain distance measurements that are processed to determine amount of deformation. The amount of deformation correlates with amount of change in measured distance between the sensor and the outer surface of the polymer coating. Alternatively, amount of deformation can be determined based on measuring thickness of the polymer coating.

The thermal treatment process can be started either without a preceding determination of amount of deformation of the polymer coating or only after determining based on steps 702 and 703, that amount of deformation of the polymer coating is more than a predetermined threshold.

Heat is applied on the polymer coating in the step 704 by using the at least one heater, to effectuate the thermal treatment. Heat applied on the polymer coating causes relaxation of the polymer coating and thus reduces deformation thereof as discussed above.

In step 705, the temperature of the polymer coating is measured by a non-contact temperature measurement sensor. Temperature is preferably measured continuously and simultaneously with step 704.

In step 706, the amount of deformation of the polymer coating is determined based on measurements made by the at least one distance measurement sensor, as already discussed above in connection to the step 702. Amount of deformation may be used as input for controlling the thermal treatment process. The amount of deformation is preferably used as decision criteria that indicates when the thermal treatment can be stopped. By comparing determined amount of deformation to a predefined threshold value, it can be determined whether the thermal treatment has achieved its goal of reducing or removing any deformation of the polymer coating.

The thermal treatment is stopped (step 710) upon determining, based on measurement performed by the non-contact distance measurement sensor, that determined amount of deformation of the polymer coating at any point on the outer surface of the nip roll less than a predetermined threshold value.

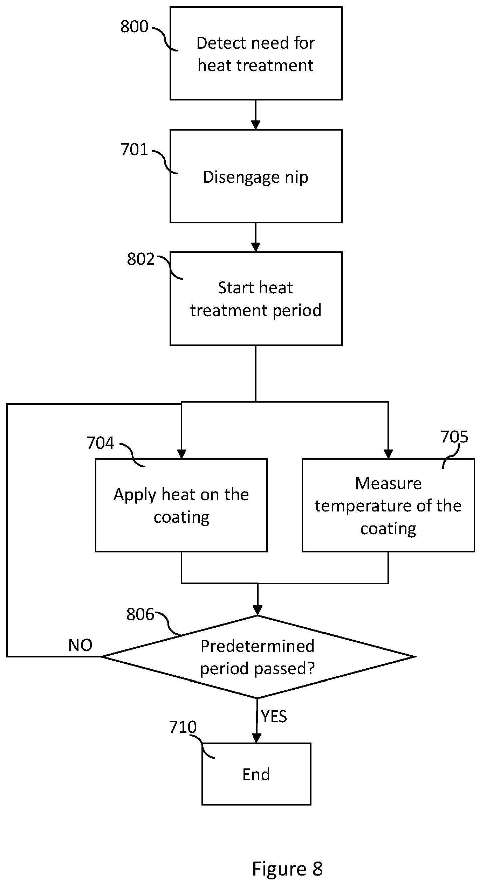

Figure 8 illustrates steps of a method of thermal treatment of a deformed polymer coating of a nip roll during a maintenance break according to some embodiments.

In the step 800, which precedes the actual thermal treatment method, need for heat treatment of the polymer coating of a nip roll for removing deformation thereof is detected. Said detection may be based on detecting vibrations of the nip roll and analyzing frequency content of the detected vibrations. Alternatively, said detection of need of heat treatment may be based on measuring amount of deformation of the polymer coating, and if it exceeds a predetermined threshold, heat treatment is needed. Step 800 may also be used in connection with the method illustrated in Figure 7.

In step 701, the nip or nips of the nip roll to be thermally treated is/are disengaged as explained above in reference to Figure 7.

In step 802, a predefined heat treatment period starts. The heat treatment period may be predefined for any nip roll based on known characteristics of the coating, such as used polymer material, thickness of the polymer coating layer, as well as based on determined characteristics such as amount of deformation.

Steps 704 and 705 are repeated as explained above, until it is determined in step 806 that the predetermined heat treatment period has passed after it was started in the step 802. After expiration of the predetermined heat treatment period, the method ends (step 710).

It is apparent to a person skilled in the art that as technology advanced, the basic idea of the invention can be implemented in various ways. The invention and its embodiments are therefore not restricted to the above examples, but they may vary within the scope of the claims.

## Claims

1. A thermal treatment apparatus for heat treating a deformed thermally shape-restoring coating (110), such as a viscoelastic polymer coating and/or rubber, of a nip roll (100), wherein the thermal treatment apparatus is configured to be placed in vicinity of the nip roll (100) and comprises a thermal treatment device (300) comprising:

   - a heater (410) for heating the thermally shape-restoring coating (110),
   - a non-contact temperature sensor (430) for measuring temperature of the thermally shape-restoring coating (110), and
   - at least one processing means (400) configured to control operation of the heater (410) on basis of the measured temperature of the thermally shape-restoring coating (110),
   **characterized in that**
   - the at least one processing means (400) is configured to determine a need for thermal treatment of the thermally shape-restoring coating (110) based on vibration of the nip roll (100) detected by one or more sensors.

2. The thermal treatment apparatus according to claim 1, wherein the thermal treatment device (300) further comprises:

   - a non-contact distance measurement sensor (420) for detecting amount of radial deformation of the thermally shape-restoring coating (110), and wherein
   - the at least one processing means (400) is further configured to control operation of the heater (410) on basis of the detected amount of deformation of the thermally shape-restoring coating (110).

3. The thermal treatment apparatus according to claim 1 or 2, wherein the at least one processing means (400) is configured to control the heater (410) to perform heat treatment of the thermally shape-restoring coating (110) over a predetermined heat treatment period.

4. The thermal treatment apparatus according to any one of claims 1 to 3, wherein need for thermal treatment of the thermally shape-restoring coating (110) is determined based on detecting increase of at least one frequency component in the vibration of the nip roll (100).

5. The thermal treatment apparatus according to any one of claims 1 to 4, wherein the heater (410) is a radiant heater such as an infrared heater, or the heater (410) is a hot-air blower.

6. The apparatus according to any one of claims 1 to 5, wherein the thermal treatment apparatus is configured to be assembled and operated in situ in the operating environment of the nip roll (100).

7. The thermal treatment apparatus according to any one of claims 1 to 6, further comprising:

   - a rail (310) configured to be permanently or removably assembled next to the nip roll (100), and
   - moving means (440) for effecting moving of the thermal treatment device (300) in the longitudinal dimension of the rail (310),
   wherein the thermal treatment device (300) is configured to be moveable along the rail (310) in vicinity of the outer surface of the nip roll (100) covered with the thermally shape-restoring coating (110) such that movement direction of the thermal treatment device (300) is parallel to the rotation axis of the nip roll (100), and
   wherein the at least one processing means (400) is further configured to control said movement of the thermal treatment device (300) along the rail (310).

8. The thermal treatment apparatus according to any one of claims 1 to 6, wherein the thermal treatment device (300) is an elongated device extending over the longitudinal dimension of the nip roll (100) that is coated by the thermally shape-restoring coating (110), wherein the thermal treatment device (300) is configured to be permanently or removably assembled next to the nip roll (100) in vicinity of the outer surface of the nip roll (100) covered with the thermally shape-restoring coating (110) such that the longitudinal axis of the thermal treatment device (300)11. is parallel to the rotation axis of the nip roll (100).

9. The thermal treatment apparatus according to any one of claims 1 to 8, wherein the thermal treatment apparatus further comprises a data communication interface for providing a user interface.

10. A method for heat treating of a deformed thermally shape-restoring coating (110), such as a viscoelastic polymer coating and/or rubber, of a nip roll (100) during a maintenance break, the method comprising:

    - disengaging (701) nip of the nip roll (100);
    - heating (704) the thermally shape-restoring coating (110) with a heater (410) of a thermal treatment device (300) to cause relaxation of the thermally shape-restoring coating (110) to restore its shape;
    - measuring (705) temperature of the thermally shape-restoring coating (110) by a non-contact temperature measurement sensor (430); and
    - controlling operation of the heater (410) on basis of the measured temperature of the thermally shape-restoring coating (110).

11. The method according to claim 10, further comprising:

    - determining (702) amount of deformation of the thermally shape-restoring coating (110) based on a measurement performed by a non-contact distance measurement sensor (420); and
    - controlling operation of the heater (410) on basis of the determined amount of deformation of the thermally shape-restoring coating (110).

12. The method according to claim 10 or 11, further comprising:

    - controlling (802, 806) the heater (410) to perform heat treatment of the thermally shape-restoring coating (110) over a predetermined heat treatment period.

13. The method according to any one of claims 10 to 12, further comprising:

- determining (800) need for thermal treatment of the thermally shape-restoring coating (110) based on vibration of the nip roll (100) detected by one or more sensors.

14. The method according to claim 13, wherein said determining need for thermal treatment of the thermally shape-restoring coating (110) is based on detecting increase of at least one frequency component in the detected vibration of the nip roll (100).

15. The method according to any one of claims 10 to 14, wherein said disengaging (701) the nip of the nip roll (100) is performed by adjusting support means of the nip roll (100), without disassembling the nip roll (100).

16. The method according to any one of claims 10 to 15, wherein the method comprises:

- stopping (710) the heat treatment upon determining (703), based on measurement performed by the non-contact distance measurement sensor (420), that amount of deformation of the thermally shape-restoring coating (110) at any point on the outer surface of the nip roll (100) is less than a predetermined threshold value.

17. The method according to any one of claims 10 to 16, wherein the method comprises cleaning the outer surface of the thermally shape-restoring coating (110) from any debris before heating the thermally shape-restoring coating (110).

18. The method according to any one of claims 10 to 17, when implemented by a thermal treatment apparatus according to claim 7, further comprising:

- controlling position and/or movement speed of the thermal treatment device (300) by the at least one processing means (400).

## Patentansprüche

1. Thermobehandlungseinrichtung zur Wärmebehandlung einer verformten thermisch formerholenden Beschichtung (110), wie einer viskoelastischen Polymerbeschichtung und/oder Gummierung, einer Nipwalze (100), wobei die Thermobehandlungseinrichtung so ausgelegt ist, dass sie in der Nähe der Nipwalze (100) platziert wird, und eine Thermobehandlungsvorrichtung (300) umfasst, die Folgendes umfasst:

- ein Heizelement (410) zum Erwärmen der thermisch formerholenden Beschichtung (110),
- einen kontaktfreien Temperaturfühler (430) zum Messen der Temperatur der thermisch formerholenden Beschichtung (110), und
- mindestens ein Verarbeitungsmittel (400), das dazu ausgelegt ist, den Betrieb des Heizelements (410) auf Grundlage der gemessenen Temperatur der thermisch formerholenden Beschichtung (110) zu steuern, **gekennzeichnet dadurch, dass**
- das mindestens eine Verarbeitungsmittel (400) dazu ausgelegt ist, einen Bedarf für die Wärmebehandlung der thermisch formerholenden Beschichtung (110) auf Grundlage einer von einem oder mehreren Sensoren erfassten Schwingung der Nipwalze (100) zu bestimmen.

2. Thermobehandlungseinrichtung nach Anspruch 1, wobei die Thermobehandlungsvorrichtung (300) ferner umfasst:

- einen kontaktfreien Distanzmessfühler (420) zum Erfassen des Betrags der radialen Verformung der thermisch formerholenden Beschichtung (110), und wobei
- das mindestens eine Verarbeitungsmittel (400) ferner dazu ausgelegt ist, den Betrieb des Heizelements (410) auf Grundlage des erfassten Betrags der Verformung der thermisch formerholenden Beschichtung (110) zu steuern.

3. Thermobehandlungseinrichtung nach Anspruch 1 oder 2, wobei das mindestens eine Verarbeitungsmittel (400) dazu ausgelegt ist, das Heizelement (410) zur Durchführung einer Wärmebehandlung der thermisch formerholenden Beschichtung (110) über eine vorherbestimmte Wärmebehandlungsdauer zu steuern.

4. Thermobehandlungseinrichtung nach einem der Ansprüche 1 bis 3, wobei der Bedarf für eine Wärmebehandlung der thermisch formerholenden Beschichtung (110) basierend darauf bestimmt wird, dass eine Erhöhung mindestens einer Frequenzkomponente in der Schwingung der Nipwalze (100) erfasst wird.

5. Thermobehandlungseinrichtung nach einem der Ansprüche 1 bis 4, wobei das Heizelement (410) ein Strahlungsheizelement wie ein Infrarotheizer ist, oder das Heizelement (410) ein Heißluftgebläse ist.

6. Einrichtung nach einem der Ansprüche 1 bis 5, wobei die Thermobehandlungseinrichtung so ausgelegt ist, dass sie in der Betriebsumgebung der Nipwalze (100) vor Ort montiert und betrieben wird.

7. Thermobehandlungseinrichtung nach einem der Ansprüche 1 bis 6, ferner umfassend:

   - eine Schiene (310), die so ausgelegt ist, dass sie dauerhaft oder abnehmbar neben der Nipwalze (100) montiert wird, und
   - ein Bewegungsmittel (440) zur Bewirkung einer Bewegung der Thermobehandlungsvorrichtung (300) in der Längsdimension der Schiene (310),
   wobei die Thermobehandlungsvorrichtung (300) so ausgelegt ist, dass sie entlang der Schiene (310) in der Nähe der Außenfläche der mit der thermisch formerholenden Beschichtung (110) bezogenen Nipwalze (100) beweglich ist, so dass die Bewegungsrichtung der Thermobehandlungsvorrichtung (300) parallel zur Drehachse der Nipwalze (100) ist, und
   wobei das mindestens eine Verarbeitungsmittel (400) ferner dazu ausgelegt ist, die Bewegung der Thermobehandlungsvorrichtung (300) entlang der Schiene (310) zu steuern.

8. Thermobehandlungseinrichtung nach einem der Ansprüche 1 bis 6, wobei die Thermobehandlungsvorrichtung (300) eine längliche Vorrichtung ist, die sich über die Längsdimension der mit der thermisch formerholenden Beschichtung (110) beschichteten Nipwalze (100) erstreckt, wobei die Thermobehandlungsvorrichtung (300) so ausgelegt ist, dass sie in der Nähe der Außenfläche der mit der thermisch formerholenden Beschichtung (110) bezogenen Nipwalze (100) dauerhaft oder abnehmbar neben der Nipwalze (100) montiert wird, so dass die Längsachse der Thermobehandlungsvorrichtung (300) parallel zur Drehachse der Nipwalze (100) ist.

9. Thermobehandlungseinrichtung nach einem der Ansprüche 1 bis 8, wobei die Thermobehandlungseinrichtung ferner eine Datenkommunikationsschnittstelle zur Bereitstellung einer Benutzerschnittstelle umfasst.

10. Verfahren zur Wärmebehandlung einer verformten thermisch formerholenden Beschichtung (110), wie einer viskoelastischen Polymerbeschichtung und/oder Gummierung, einer Nipwalze (100) während einer Instandhaltungsunterbrechung, wobei das Verfahren umfasst:

    - Ausrücken (701) des Nips der Nipwalze (100);
    - Erwärmen (704) der thermisch formerholenden Beschichtung (110) mit einem Heizelement (410) einer Thermobehandlungsvorrichtung (300) zur Bewirkung einer Entlastung der thermisch formerholenden Beschichtung (110) zur Wiederherstellung ihrer Form;
    - Messen (705) der Temperatur der thermisch formerholenden Beschichtung (110) durch einen kontaktfreien Temperaturmessfühler (430); und
    - Steuern des Betriebs des Heizelements (410) auf Grundlage der gemessenen Temperatur der thermisch formerholenden Beschichtung (110).

11. Verfahren nach Anspruch 10, ferner umfassend:

    - Bestimmen (702) des Betrags der Verformung der thermisch formerholenden Beschichtung (110) auf Grundlage einer durch einen kontaktfreien Distanzmessfühler (420) durchgeführten Messung; und
    - Steuern des Betriebs des Heizelements (410) auf Grundlage des bestimmten Betrags der Verformung der thermisch formerholenden Beschichtung (110).

12. Verfahren nach Anspruch 10 oder 11, ferner umfassend:

    - Steuern (802, 806) des Heizelements (410) zur Durchführung einer Wärmebehandlung der thermisch formerholenden Beschichtung (110) über eine vorherbestimmte Wärmebehandlungsdauer.

13. Verfahren nach einem der Ansprüche 10 bis 12, ferner umfassend:

    - Bestimmen (800) eines Bedarfs für die Wärmebehandlung der thermisch formerholenden Beschichtung (110) auf Grundlage der von einem oder mehreren Sensoren erfassten Schwingung der Nipwalze (100).

14. Verfahren nach Anspruch 13, wobei die Bestimmung des Bedarfs für eine Wärmebehandlung der thermisch formerholenden Beschichtung (110) darauf basiert, dass eine Erhöhung mindestens einer Frequenzkomponente in der erfassten Schwingung der Nipwalze (100) erfasst wird.

15. Verfahren nach einem der Ansprüche 10 bis 14, wobei das Ausrücken (701) des Nips der Nipwalze (100) durch die Verstellung von Stützmitteln der Nipwalze (100) ohne Ausbau der Nipwalze (100) ausgeführt wird.

16. Verfahren nach einem der Ansprüche 10 bis 15, wobei das Verfahren umfasst:

- Beenden (710) der Wärmebehandlung bei Feststellung (703) auf Grundlage einer vom kontaktfreien Distanzmessfühler (420) durchgeführten Messung, dass der Betrag der Verformung der thermisch formerholenden Beschichtung (110) an jeglichem Punkt auf der Außenfläche der Nipwalze (100) kleiner als ein vorherbestimmter Schwellenwert ist.

17. Verfahren nach einem der Ansprüche 10 bis 16, wobei das Verfahren umfasst: Reinigen der Außenfläche der thermisch formerholenden Beschichtung (110) von Verschmutzungen vor dem Erwärmen der thermisch formerholenden Beschichtung (110).

18. Verfahren nach einem der Ansprüche 10 bis 17, wenn durch eine Thermobehandlungseinrichtung nach Anspruch 7 realisiert, ferner umfassend:

- Steuern der Position und/oder Bewegungsgeschwindigkeit der Thermobehandlungsvorrichtung (300) durch das mindestens eine Verarbeitungsmittel (400).

**Revendications**

1. Appareil de traitement thermique pour le traitement thermique d'un revêtement déformé à reprise de forme thermique (110), tel qu'un revêtement en polymère viscoélastique et/ou un revêtement en caoutchouc, d'un rouleau à zone de serrage (100), dans lequel l'appareil de traitement thermique est configuré pour être placé à proximité du rouleau à zone de serrage (100) et comprend un dispositif de traitement thermique (300) comprenant :

- un élément de chauffage (410) pour chauffer le revêtement à reprise de forme thermique (110),
- un capteur de température sans contact (430) pour mesurer la température du revêtement à reprise de forme thermique (110), et
- au moins un moyen de traitement (400) configuré pour commander le fonctionnement de l'élément de chauffage (410) sur la base de la température mesurée du revêtement à reprise de forme thermique (110),
**caractérisé en ce que**
- ledit au moins un moyen de traitement (400) est configuré pour déterminer un besoin en traitement thermique du revêtement à reprise de forme thermique (110) sur la base de la vibration du rouleau à zone de serrage (100) détectée par un ou plusieurs capteurs.

2. Appareil de traitement thermique selon la revendication 1, dans lequel le dispositif de traitement thermique (300) comprend également :

- un capteur de mesure de distance sans contact (420) pour détecter le degré de déformation radiale du revêtement à reprise de forme thermique (110), et dans lequel
- ledit au moins un moyen de traitement (400) est également configuré pour commander le fonctionnement de l'élément de chauffage (410) sur la base du degré de déformation détecté du revêtement à reprise de forme thermique (110).

3. Appareil de traitement thermique selon la revendication 1 ou 2, dans lequel ledit au moins un moyen de traitement (400) est configuré pour commander l'élément de chauffage (410) à effectuer un traitement thermique du revêtement à reprise de forme thermique (110) pendant une période de traitement thermique prédéterminée.

4. Appareil de traitement thermique selon l'une des revendications 1 à 3, dans lequel le besoin en traitement thermique du revêtement à reprise de forme thermique (110) est déterminé sur la base de la détection d'une augmentation d'au moins une composante de fréquence dans la vibration du rouleau à zone de serrage (100).

**5.** Appareil de traitement thermique selon l'une des revendications 1 à 4, dans lequel l'élément de chauffage (410) est un dispositif de chauffage par rayonnement tel qu'un dispositif de chauffage infrarouge, ou l'élément de chauffage (410) est une soufflante d'air chaud.

**6.** Appareil selon l'une des revendications 1 à 5, dans lequel l'appareil de traitement thermique est configuré pour être monté et exploité sur place dans l'environnement de fonctionnement du rouleau à zone de serrage (100).

**7.** Appareil de traitement thermique selon l'une des revendications 1 à 6, comprenant également :

- un rail (310) configuré pour être monté de manière permanente ou amovible à côté du rouleau à zone de serrage (100), et
- un moyen de déplacement (440) pour effectuer un déplacement du dispositif de traitement thermique (300) dans la dimension longitudinale du rail (310),
dans lequel le dispositif de traitement thermique (300) est configuré pour être mobile le long du rail (310) à proximité de la surface extérieure du rouleau à zone de serrage (100) recouvert du revêtement à reprise de forme thermique (110) de telle sorte que la direction du déplacement du dispositif de traitement thermique (300) est parallèle à l'axe de rotation du rouleau à zone de serrage (100), et
dans lequel ledit au moins un moyen de traitement (400) est également configuré pour commander ledit déplacement du dispositif de traitement thermique (300) le long du rail (310).

**8.** Appareil de traitement thermique selon l'une des revendications 1 à 6, dans lequel le dispositif de traitement thermique (300) est un dispositif allongé s'étendant sur la dimension longitudinale du rouleau à zone de serrage (100) qui est recouvert du revêtement à reprise de forme thermique (110), dans lequel le dispositif de traitement thermique (300) est configuré pour être monté de manière permanente ou amovible à proximité de la surface extérieure du rouleau à zone de serrage (100) recouvert du revêtement à reprise de forme thermique (110) à côté du rouleau à zone de serrage (100) de telle sorte que l'axe longitudinal du dispositif de traitement thermique (300) soit parallèle à l'axe de rotation du rouleau à zone de serrage (100).

**9.** Appareil de traitement thermique selon l'une des revendications 1 à 8, dans lequel l'appareil de traitement thermique comprend également une interface de communication de données pour prévoir une interface d'utilisateur.

**10.** Procédé pour le traitement thermique d'un revêtement déformé à reprise de forme thermique (110), tel qu'un revêtement en polymère viscoélastique et/ou un revêtement en caoutchouc, d'un rouleau à zone de serrage (100) pendant un arrêt de maintenance, ledit procédé comprenant les étapes consistant à :

- dégager (701) la ligne de contact du rouleau à zone de serrage (100) ;
- chauffer (704) le revêtement à reprise de forme thermique (110) avec un élément de chauffage (410) d'un dispositif de traitement thermique (300) pour provoquer une relaxation du revêtement à reprise de forme thermique (110) afin de rétablir sa forme;
- mesurer (705) la température du revêtement à reprise de forme thermique (100) par un capteur de mesure de température sans contact (430); et
- commander le fonctionnement de l'élément de chauffage (410) sur la base de la température mesurée du revêtement à reprise de forme thermique (110).

**11.** Procédé selon la revendication 10, comprenant également les étapes consistant à :

- déterminer (702) le degré de déformation du revêtement à reprise de forme thermique (100) sur la base d'une mesure effectuée par un capteur de mesure de distance sans contact (420); et
- commander le fonctionnement de l'élément de chauffage (410) sur la base du degré de déformation déterminé du revêtement à reprise de forme thermique (110).

**12.** Procédé selon la revendication 10 ou 11, comprenant également l'étape consistant à :

- commander (802, 806) l'élément de chauffage (410) à effectuer un traitement thermique du revêtement à reprise de forme thermique (110) pendant une période de traitement thermique prédéterminée.

**13.** Procédé selon l'une des revendications 10 à 12, comprenant également l'étape consistant à :

- déterminer (800) un besoin en traitement thermique du revêtement à reprise de forme thermique (110) sur la base de la vibration du rouleau à zone de serrage (100) détectée par un ou plusieurs capteurs.

14. Procédé selon la revendication 13, dans lequel la détermination du besoin en traitement thermique du revêtement à reprise de forme thermique (110) est basée sur la détection d'une augmentation d'au moins une composante de fréquence dans la vibration détectée du rouleau à zone de serrage (100).

15. Procédé selon l'une des revendications 10 à 14, dans lequel le dégagement (701) de la ligne de contact du rouleau à zone de serrage (100) est effectué par la variation de moyens de support du rouleau à zone de serrage (100), sans démontage du rouleau à zone de serrage (100).

16. Procédé selon l'une des revendications 10 à 15, dans lequel le procédé comprend l'étape consistant à :

- arrêter (710) le traitement thermique lorsqu'il est déterminé (703) sur la base d'une mesure effectuée par le capteur de mesure de distance sans contact (420) que le degré de déformation du revêtement à reprise de forme thermique (110) en chaque point sur la surface extérieure du rouleau à zone de serrage (100) est inférieur à une valeur-seuil prédéterminée.

17. Procédé selon l'une des revendications 10 à 16, dans lequel le procédé comprend l'étape consistant à nettoyer la surface extérieure du revêtement à reprise de forme thermique (110) de tout débris avant de chauffer le revêtement à reprise de forme thermique (110).

18. Procédé selon l'une des revendications 10 à 17, lorsqu'il est réalisé par un appareil de traitement thermique selon la revendication 7, comprenant également l'étape consistant à :

- commander la position et/ou la vitesse de déplacement du dispositif de traitement thermique (300) par ledit au moins un moyen de traitement (400).

Figure 1

Figure 2

Figure 3

Figure 4

Figure 5

Figure 6

300

701  Disengage nip

702  Determine amount of deformation

703  Amount of deformation over threshold?

710  End

NO

YES

704  Apply heat on the coating

705  Measure temperature of the coating

706  Determine amount of deformation

Figure 7

Figure 8

**EP 4 442 903 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 123813 B
- EP 1086273 B1
- US 3529045 A